(19) Europäisches Patentamt
European Patent Office
Office européen des brevets

(11) EP 2 583 825 B1

(12) EUROPEAN PATENT SPECIFICATION

(45) Date of publication and mention of the grant of the patent:
**01.04.2020 Bulletin 2020/14**

(21) Application number: **11798067.2**

(22) Date of filing: **17.06.2011**

(51) Int Cl.:
***B32B 27/30*** *(2006.01)* ***B32B 27/00*** *(2006.01)*
***B32B 27/06*** *(2006.01)* ***B32B 27/32*** *(2006.01)*
***B32B 3/26*** *(2006.01)* ***B32B 3/28*** *(2006.01)*
*B32B 27/08 (2006.01)*

(86) International application number:
**PCT/JP2011/063949**

(87) International publication number:
**WO 2011/162183 (29.12.2011 Gazette 2011/52)**

(54) **THERMOPLASTIC RESIN LAMINATE**

THERMOPLASTISCHES HARZLAMINAT

STRATIFIÉ DE RÉSINE THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2010 JP 2010140183**

(43) Date of publication of application:
**24.04.2013 Bulletin 2013/17**

(73) Proprietor: **Mitsubishi Gas Chemical Company, Inc.**
**Tokyo 100-8324 (JP)**

(72) Inventors:
- **SATO, Kazuya**
**Hiratsuka-shi**
**Kanagawa 254-0016 (JP)**
- **KOIKE, Nobuyuki**
**Hiratsuka-shi**
**Kanagawa 254-0016 (JP)**
- **OGURO, Hiroki**
**Niigata-shi**
**Niigata 950-3121 (JP)**
- **AOKI, Yoshio**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
**EP-A1- 2 319 687**
**WO-A1-2010/024217**
**JP-A- 2006 199 028**
**JP-A- 2009 196 125**
**US-A1- 2002 045 056**
**US-A1- 2004 247 885**

EP 2 583 825 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a thermoplastic resin laminate and, more particularly, to a thermoplastic resin laminate for use as a transparent substrate material or a transparent protective material, the laminate having excellent transparency, low birefringence, and high pattern-formability.

### Background Art

Transparent resin plates find various uses, such as in sound-proof partition walls, carports, signboards, and optical sheets such as a display front plate, light guide plate, and prism sheet for a liquid crystal display device of OA equipment or portable electronic equipment. In particular, liquid crystal display devices now show in trends for downsizing, shape thinning, and conversion to mobile devices. Toward the trends, optical sheets for use in liquid crystal display devices are required to have additional functions such as transparency, heat resistance, and low birefringence as well as enhanced brightness and viewing angle.

In recent years, there have been employed various techniques for improving brightness and viewing angle of such optical sheets by imparting a specific shape to the surfaces of the sheets. Hitherto, injection molding, casting, hot-pressing, monomer casting employing UV-curable resin, and roller embossing through extrusion have been widely employed as methods for imparting a specific shape to the surface of the an optical sheet. Among these techniques, roller embossing through extrusion is widely employed, from the viewpoints of productivity, safety, and product cost.

In roller embossing through extrusion, a thermoplastic resin is continuously supplied to a pattern-forming roller having specifically-patterned surface grooves and a pressing roller, and the resin is compressed and cooled by both of the rollers, whereby the specific shape is imparted to the surface of the molded resin sheet. For example, an optical sheet having a desired shape on a surface thereof is can be produced.

The above extrusion method employs a shape-imparting time shorter than that required by other molding methods. Therefore, when a thermoplastic resin whose fluidity considerably lowers at low resin temperature; e.g., a methacrylic resin, is used, the resin cannot run through to deep portions of the grooves of a pattern-forming roller. In this case, an optical sheet having a desired shape may fail to be yielded.

In order to enhance the pattern-formability of a thermoplastic resin to even a slight extent, there is a possible approach in which the processed thermoplastic resin is shaped at as low a viscosity as possible while the pattern-forming roller is maintained at high temperature. However, since the thermoplastic resin cannot be sufficiently cooled after pattern-forming, the given pattern is restored to the original shape, resulting in poor pattern-formability.

Thus, when an optical sheet having a surface shape of interest is produced by roller embossing through extrusion employing a methacrylic resin, the possible production conditions are severely limited, making consistent production thereof difficult (Patent Document 1).

Instead, a polycarbonate resin, which exhibits comparatively high fluidity at low resin temperature, is often used for producing an optical sheet through the above molding technique (Patent Documents 2 and 3). However, since polycarbonate resin is poor in transparency and low birefringence as compared with methacrylic resin, a liquid crystal display device employing the thus-produced optical sheet exhibits poor brightness and some color defects, which is problematic.

### Prior Art Document

### Patent Documents

Patent Document 1: Japanese Patent Application Laid-Open (*kokai*) No. 2009-172794
Patent Document 2: Japanese Patent Application Laid-Open (*kokai*) No. 2007-090859
Patent Document 3: Japanese Patent Application Laid-Open (*kokai*) No. 2007-108475

US2004/0247885 discloses a surface modified methyl methacrylate polymer based transparent sheet material.

Summary of the Invention

Problems to be Solved by the Invention

Thus, an object of the present invention is to provide a thermoplastic resin laminate which is used as a transparent substrate material or a transparent protective material and which is excellent in transparency, birefringence, and pattern-formability. Another object of the invention is to provide an optical sheet using the thermoplastic resin laminate.

Means for Solving the Problems

In order to solve the aforementioned problems, the present inventors have conducted extensive studies, and have found that when a vinyl copolymer resin layer is provided on one side or both sides of a methacrylic resin plate or a laminate thereof, the vinyl copolymer resin layer being produced by polymerizing a (meth)acrylate monomer and an aromatic vinyl monomer, followed by hydrogenation, a thermoplastic resin laminate having such properties can be produced. The present invention has been accomplished on the basis of this finding.

Accordingly, the present invention provides the following thermoplastic resin laminate and optical sheet using the thermoplastic resin laminate.

1. A thermoplastic resin laminate formed of a methacrylic resin (B) layer, and a vinyl copolymer resin (A) layer laminated on one side or both sides of the methacrylic resin (B) layer, wherein the vinyl copolymer resin (A) contains a (meth)acrylate structural unit (a) represented by the following formula (1):

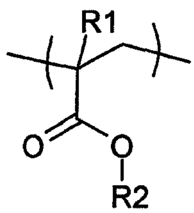

(1)

(wherein R1 represents a hydrogen atom or a methyl group, and R2 represents a C1 to C18 alkyl group), and an aliphatic vinyl structural unit (b) represented by the following formula (2):

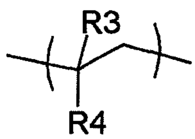

(2)

(wherein R3 represents a hydrogen atom or a methyl group, and R4 represents a cyclohexyl group optionally having a C1 to C4 alkyl substituent); in which the ratio of the sum of the (meth)acrylate structural units (a) and the aliphatic vinyl structural units (b) is 90 to 100 mol% with respect to all the structural units that form the vinyl copolymer resin (A); in which the ratio by mole of the (meth)acrylate structural unit (a) to the aliphatic vinyl structural unit (b) is 65 : 35 to 85 : 15; and in which the methacrylic resin (B) is poly(methyl methacrylate) or a methyl methacrylate methyl acrylate copolymer resin.

2. A thermoplastic resin laminate formed of a methacrylic resin (B) layer, a thermoplastic resin (C) layer containing a methyl methacrylate-styrene copolymer or an acrylonitrile-styrene copolymer and being laminated on one side or both sides of the methacrylic resin (B) layer, and a vinyl copolymer resin (A') layer further laminated thereon, wherein the vinyl copolymer resin (A') contains a (meth)acrylate structural unit (a) represented by the aforementioned formula (1), and an aliphatic vinyl structural unit (b) represented by the aforementioned formula (2); in which the ratio of the sum of the (meth)acrylate structural units (a) and the aliphatic vinyl structural units (b) is 90 to 100 mol% with respect to all the structural units that form the vinyl copolymer resin (A'); in which the ratio by mole of the (meth)acrylate structural unit (a) to the aliphatic vinyl structural unit (b) is 15 : 85 to 85 : 15; and in which the methacrylic resin (B) is poly(methyl methacrylate) or a methyl methacrylate methyl acrylate copolymer resin.

3. A thermoplastic resin laminate as described in 1 or 2 above, wherein the vinyl copolymer resin (A) or the vinyl copolymer resin (A') is one obtained through polymerization of at least one (meth)acrylate monomer and at least one aromatic vinyl monomer followed by hydrogenation of 70% or more of the aromatic double bonds derived from the aromatic vinyl monomer.

4. A thermoplastic resin laminate as described in any of 1 to 3 above, wherein, in the formula (1), each of R1 and R2 is a methyl group.
5. A thermoplastic resin laminate as described in any of 1 to 4 above, wherein, in the formula (2), R3 is a hydrogen atom, and R4 is a cyclohexyl group.
6. A thermoplastic resin laminate as described in any of 1 to 5 above, wherein one side or both sides of the thermoplastic resin laminate are embossed.
7. An optical sheet comprising a thermoplastic resin laminate as recited in any of 1 to 6 above.

Effects of the Invention

According to the present invention, there is provided a thermoplastic resin laminate which is excellent in transparency, low birefringence, pattern-formability. The thermoplastic resin laminate is used as an optical article such as a transparent substrate material or a transparent protective material, particularly suitably as a front plate, a light guide plate, a prism sheet, of a liquid crystal display.

Modes for Carrying out the Invention

The thermoplastic resin laminate of the present invention is directed to a thermoplastic resin laminate formed of a methacrylic resin (B) layer, and a vinyl copolymer resin (A) layer laminated on one side or both sides of the methacrylic resin (B) layer, characterized in that the vinyl copolymer resin (A) contains a (meth)acrylate structural unit (a) represented by the following formula (1) and an aliphatic vinyl structural unit (b) represented by the following formula (2); that the ratio of the sum of the (meth)acrylate structural units (a) and the aliphatic vinyl structural units (b) is 90 to 100 mol% with respect to all the structural units that form the vinyl copolymer resin (A); that the ratio by mole of the (meth)acrylate structural unit (a) to the aliphatic vinyl structural unit (b) is 65 : 35 to 85 : 15; and that the methacrylic resin (B) contains a structural unit having no benzene ring in an amount of 90 mol% or more with respect to all the structural units thereof; and is directed to a thermoplastic resin laminate formed of a methacrylic resin (B) layer, a thermoplastic resin (C) layer containing a methyl methacrylate-styrene copolymer or an acrylonitrile-styrene copolymer and being laminated on one side or both sides of the methacrylic resin (B) layer, and a vinyl copolymer resin (A') layer further laminated thereon, characterized in that the vinyl copolymer resin (A') contains a (meth)acrylate structural unit (a) represented by the formula (1), and an aliphatic vinyl structural unit (b) represented by the formula (2); in which the ratio of the sum of the (meth)acrylate structural units (a) and the aliphatic vinyl structural units (b) is 90 to 100 mol% with respect to all the structural units that form the vinyl copolymer resin (A'); in which the ratio by mole of the (meth)acrylate structural unit (a) to the aliphatic vinyl structural unit (b) is 15 : 85 to 85 : 15; and in which the methacrylic resin (B) contains a structural unit having no benzene ring in an amount of 90 mol% or more with respect to all the structural units thereof.

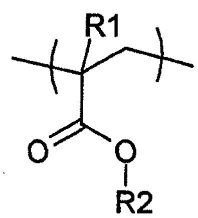

(1)

(wherein R1 represents a hydrogen atom or a methyl group, and R2 represents a C1 to C18 alkyl group)

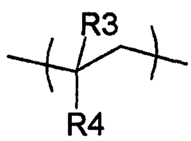

(2)

(wherein R3 represents a hydrogen atom or a methyl group, and R4 represents a cyclohexyl group optionally having a C1 to C4 alkyl substituent)
In the (meth)acrylate structural unit represented by the formula (1), R2 represents a C1 to C18 alkyl group. Examples of the alkyl group include methyl, ethyl, butyl, lauryl, stearyl, cyclohexyl, and isobornyl.
Among such (meth)acrylate structural units, a (meth)acrylate structural unit in which herein R2 is a methyl

group and/or an ethyl group is preferred, with a methyl methacrylate structural unit, in which R1 is a methyl group, and R2 is an methyl group, being more preferred.

Examples of the aliphatic vinyl structural unit represented by the formula (2) include an aliphatic vinyl structural unit in which R3 is a hydrogen atom or a methyl group, and R4 is a cyclohexyl group or a cyclohexyl group having a C1 to C4 alkyl substituent.

Among such aliphatic vinyl structural units, an aliphatic vinyl structural unit in which R3 is a hydrogen atom, and R4 is a cyclohexyl group is preferred.

The vinyl copolymer resin (A) used in the present invention mainly contains a (meth)acrylate structural unit (a) represented by formula (1) and an aliphatic vinyl structural unit (b) represented by formula (2). The vinyl copolymer resin (A) may contain one or more species of the (meth)acrylate structural unit (a), or one or more of the aliphatic vinyl structural unit (b). The vinyl copolymer resin (A) has a ratio of the sum of the (meth)acrylate structural units (a) and the aliphatic vinyl structural units (b) with respect to all the structural units that form the vinyl copolymer resin (A) of 90 to 100 mol%, preferably 95 to 100 mol%.

That is, the vinyl copolymer resin (A) may contain, other than the (meth)acrylate structural unit (a) and the aliphatic vinyl structural unit (b), another structural unit in an amount of 10 mol% or less.

Examples of the structural unit other than the (meth)acrylate structural unit (a) and the aliphatic vinyl structural unit (b) include a structural unit having non-hydrogenated aromatic double bonds derived from an aromatic vinyl monomer, which unit is present in the vinyl copolymer resin (A) produced by polymerizing a (meth)acrylate monomer and an aromatic vinyl monomer and hydrogenating aromatic double bonds of the aromatic vinyl monomer.

The vinyl copolymer resin (A) preferably has a ratio by mole of the (meth)acrylate structural unit (a) represented by formula (1) to the aliphatic vinyl structural unit (b) represented by formula (2) is 65 : 35 to 85 : 15, more preferably 70 : 30 to 80 : 20.

When the ratio by mole of the (meth)acrylate structural unit (a) to the sum of the (meth)acrylate structural unit (a) and the aliphatic vinyl structural unit (b) is less than 65%, adhesion between the vinyl copolymer resin (A) and the methacrylic resin (B) is reduced, which is not practical, whereas when the mole ratio is in excess of 85%, the vinyl copolymer resin (A) is insufficient in heat resistance, and the pattern-formability thereof is likely to decrease.

The vinyl copolymer resin (A') used in the present invention mainly comprises a (meth)acrylate structural unit (a) represented by formula (1) and an aliphatic vinyl structural unit (b) represented by formula (2). The vinyl copolymer resin (A') may contain one or more species of the (meth)acrylate structural unit (a), or one or more of the aliphatic vinyl structural unit (b). The vinyl copolymer resin (A') has a ratio of the sum of the (meth)acrylate structural units (a) and the aliphatic vinyl structural units (b) with respect to all the structural units that form the vinyl copolymer resin (A') of 90 to 100 mol%, preferably 95 to 100 mol%.

That is, the vinyl copolymer resin (A') may contain, other than the (meth)acrylate structural unit (a) and the aliphatic vinyl structural unit (b), another structural unit in an amount of 10 mol% or less.

Examples of the structural unit other than the (meth)acrylate structural unit (a) and the aliphatic vinyl structural unit (b) include a structural unit having non-hydrogenated aromatic double bonds derived from an aromatic vinyl monomer, which unit is present in the vinyl copolymer resin (A) produced by polymerizing a (meth)acrylate monomer and an aromatic vinyl monomer and hydrogenating aromatic double bonds of the aromatic vinyl monomer.

The vinyl copolymer resin (A') preferably has a ratio by mole of the (meth)acrylate structural unit (a) represented by formula (1) to the aliphatic vinyl structural unit (b) represented by formula (2) is 15 : 85 to 85 : 15.

When the ratio by mole of the (meth)acrylate structural unit (a) to the sum of the (meth)acrylate structural unit (a) and the aliphatic vinyl structural unit (b) is less than 15%, adhesion between the vinyl copolymer resin (A') and the below-mentioned thermoplastic resin (C) is reduced, and the vinyl copolymer resin (A) becomes fragile due to considerably low mechanical strength, which is not practical, whereas when the mole ratio is in excess of 85%, the vinyl copolymer resin (A) is insufficient in heat resistance, and the pattern-formability thereof is likely to decrease. From the viewpoints of adhesion the vinyl copolymer resin (A') and the thermoplastic resin (C) and the pattern-formability of the vinyl copolymer resin (A'), the mole ratio of the (meth)acrylate structural unit (a) to the aliphatic vinyl structural unit (b) is preferably in the range of 30 : 70 to 80 : 20, more preferably 45 : 55 to 75 : 25.

No particular limitation is imposed on the preferred mode of the vinyl copolymer resin (A) and the vinyl copolymer resin (A'), and preferred are vinyl copolymer resins obtained through polymerization of at least one (meth)acrylate monomer and at least one aromatic vinyl monomer followed by hydrogenation of the aromatic double bonds derived from the aromatic vinyl monomer. As used herein, the term "(meth)acryl" refers to shows methacryl and/or acryl.

Specific examples of the aromatic vinyl monomer used in the invention include styrene, $\alpha$-methylstyrene, p-hydroxystyrene, alkoxystyrene, chlorostyrene, and derivatives thereof. Among them, styrene is preferred.

Specific examples of the (meth)acrylate monomer include alkyl (meth)acrylates such as methyl (meth)acrylate, ethyl (meth)acrylate, butyl (meth)acrylate, lauryl (meth)acrylate, stearyl (meth)acrylate, cyclohexyl (meth)acrylate, and isobornyl (meth)acrylate. From the viewpoint of balance in physical properties, single use of an alkyl methacrylate and use of an alkyl acrylate and an alkyl methacrylate in combination are preferred. Among alkyl methacrylates, methyl

methacrylate and ethyl methacrylate are preferred.

The (meth)acrylate monomer and the aromatic vinyl monomer may be polymerized through a known technique, for example, bulk polymerization or solution polymerization.

In one procedure of bulk polymerization, the above monomers and a polymerization initiator are continuously fed to a complete mixing bath, and the monomers are continuously polymerized at 100 to 180°C. The monomer composition may further contain a chain transfer agent, if necessary.

No particular limitation is imposed on the polymerization initiator, and examples of the initiator include organic peroxides such as t-amyl peroxy-2-ethylhexanoate, t-butyl peroxy-2-ethylhexanoate, benzoyl peroxide, 1,1-di(t-hexylperoxy)-3,3,5-trimethylcyclohexane, 1,1-di(t-hexylperoxy)cyclohexane, 1,1-di(t-butylperoxy)cyclohexane, t-hexyl propoxyisopropylmonocarbonate, t-amyl peroxy-n-octoate, t-butyl peroxyisopropylmonocarbonate, and di-t-butyl peroxide; and azo compounds such as 2,2'-azobisisobutyronitrile, 2,2'-azobis(2-methylbutyronitrile), and 2,2'-azo-bis(2,4-dimethylvaleronitrile). These initiators may be used singly or in combination of two or more species.

The chain transfer agent may be used in accordance with needs. Examples of the chain transfer agent include $\alpha$-methylstyrene dimer.

Examples of the solvent used in solution polymerization method include hydrocarbon solvents such as toluene, xylene, cyclohexane, and methylcyclohexane; ester solvents such as ethyl acetate and methyl isobutyrate; ketone solvents such as acetone and methyl ethyl ketone; ether solvents such as tetrahydrofuran and dioxane; and alcohol solvents such as methanol and isopropanol.

The solvent used in hydrogenation performed after polymerization of the (meth)acrylate monomer and the aromatic vinyl monomer may be the same as the polymerization solvent or may be different therefrom. Examples of the solvent include hydrocarbon solvents such as cyclohexane and methylcyclohexane; ester solvents such as ethyl acetate and methyl isobutyrate; ketone solvents such as acetone and methylethyl ketone; ether solvents such as tetrahydrofuran and dioxane; and alcohol solvents such as methanol and isopropanol.

As described above, the vinyl copolymer resin (A) or the vinyl copolymer resin (A') of the present invention can be produced by polymerizing the above-produced (meth)acrylate monomer and aromatic vinyl monomer, and hydrogenating aromatic double bonds present in the aromatic vinyl monomer.

No particular limitation is imposed on the method of hydrogenation, and a known technique therefor may be employed. In one hydrogenation procedure, hydrogenation is performed at a hydrogen pressure of 3 to 30 MPa and a reaction temperature is 60 to 250°C in a batch or flow manner. When the temperature is elevated to 60°C or higher, an excessively long reaction time is avoided, whereas when the temperature is 250°C or lower, cut of a molecular chain or hydrogenation of an ester site can be prevented.

Examples of the catalyst used in hydrogenation reaction include a solid catalyst in which a metal such as nickel, palladium, platinum, cobalt, ruthenium or rhodium, or an oxide, a salt, or a complex thereof is supported by a porous carrier such as carbon, alumina, silica, silica-alumina, or diatomaceous earth.

Preferably, the vinyl copolymer resin (A) or the vinyl copolymer resin (A') is obtained by hydrogenation of 70% or more of the aromatic double bonds derived from the aromatic vinyl monomer. In other words, the vinyl copolymer resin (A) or the vinyl copolymer resin (A') preferably has a ratio of unhydrogenated aromatic double bonds in the structural units derived from the aromatic vinyl monomer of 30% or less. When the ratio is more than 30%, the transparency of the vinyl copolymer resin (A) and the vinyl copolymer resin (A') may be lowered. Thus, the unhydrogenated site ratio is more preferably 20% or less, still more preferably 10% or less.

No particular limitation is imposed on the weight average molecular weight of the vinyl copolymer resin (A) or the vinyl copolymer resin (A'), and it is preferably 50,000 to 400,000, more preferably 70,000 to 300,000, from the viewpoint of strength and moldability.

The weight average molecular weight is a weight average molecular weight as reduced to a standard polystyrene, which is determined through gel permeation chromatography (GPC).

The vinyl copolymer resin (A) or the vinyl copolymer resin (A) may be further blended with another resin, so long as the transparency of the product is not impaired. Examples of such resins include a methyl methacrylate-styrene copolymer resin, poly(methyl methacrylate), polystyrene, and polycarbonate.

The glass transition temperature of the vinyl copolymer resin (A) or the vinyl copolymer resin (A') is preferably 110 to 140°C. When the glass transition temperature is 110°C or higher, the laminate is sufficient in heat resistance, whereas when the glass transition temperature is 140°C or lower, the laminate is excellent in workability such as heat forming. As used herein, the term "glass transition temperature" refers to a glass transition temperature determined by means of a differential scanning calorimeter with a sample in an amount of 10 mg at a temperature elevation rate of 10 degrees/minute. Calculation is performed through the midpoint method.

The methacrylic resin (B) used in the present invention contains a structural unit having no benzene ring in an amount of 90 mol% or more with respect to all the structural units thereof, preferably 95 mol% or more. The methacrylic resin (B) forms a layer serving as the base of the thermoplastic resin laminate of the present invention, and is chosen in accordance with the application of the resin laminate. Examples of the methacrylic resin (B) include poly(methyl

methacrylate), a methyl methacrylate-methyl acrylate copolymer resin, and a methyl methacrylate-methyl acrylate copolymer resin having a styrene component content of 10 mol% or less, with respect to all the structural units. Of these, poly(methyl methacrylate) is preferably used by virtue of its excellent transparency.

The thermoplastic resin (C) used in the present invention is a thermoplastic resin containing a methyl methacrylate-styrene copolymer resin or an acrylonitrile-styrene copolymer.

Examples of the resin containing a methyl methacrylate-styrene copolymer include Estyrene MS200, Estyrene MS300, Estyrene MS500, Estyrene MS600, and Estyrene MS750, which are products of Nippon Steel Chemical Co., Ltd. Examples of the resin comprising an acrylonitrile-styrene copolymer include Stylack AS767, Stylack AST8701, and Stylack AST8707, which are products of Asahi Kasei Chemicals Corporation.

The thermoplastic resin laminate of the present invention may be produced through a method such as co-extrusion.

No particular limitation is imposed on the co-extrusion method, and a known method may be employed. For example, in a feed block method, the vinyl copolymer resin (A) layer is laminated on one side or both sides of the methacrylic resin (B) layer by means of a feed block, and the resultant laminate is extruded through a T-die into a sheet, followed by cooling under passage through forming rollers, so that a desired laminate is formed. In a multi-manifold method, the vinyl copolymer resin (A) layer is laminated on one side or both sides of the methacrylic resin (B) layer in a multi-manifold die, and the resultant laminate is extruded into a sheet, followed by cooling under compression and passage through forming rollers, so that a desired laminate is formed.

In the case in which the thermoplastic resin (C) layer is provided between the vinyl copolymer resin (A) layer and the methacrylic resin (B) layer, in the feed block method, the thermoplastic resin (C) layer is laminated on one side or both sides of the methacrylic resin (B) layer by means of a feed block, and the vinyl copolymer resin (A) layer is further laminated thereon. The resultant laminate is extruded through a T-die into a sheet, and the sheet is cooled under passage through forming rollers, so that a desired laminate is formed. In the multi-manifold method, the thermoplastic resin (C) layer is laminated on one side or both sides of the methacrylic resin (B) layer in a multi-manifold die, and the vinyl copolymer resin (A') layer is further laminated thereon. The resultant laminate is extruded into a sheet, and the sheet is cooled under compression and passage through forming rollers, so that a desired laminate is formed.

No particular limitation is imposed on the forming rollers. Examples of the cooling method include a method for cooling under compression by means of a plurality of metal rollers, and a method for cooling under compression by means of metal rollers and nonmetal rollers or metal belts.

The forming rollers may be employed in combination with pattern-forming rollers. Through employment of pattern-forming rollers, embossing can be performed during molding. One side or both sides of the thermoplastic resin laminate of the present invention may be embossed. No particular limitation is imposed on the surface groove shape of the pattern-forming rollers. Preferably, the grooves have a dent-protrusion form having a groove depth of 0.1 $\mu$m to 1,000 $\mu$m and a top-to-top interval of 5 $\mu$m to 10,000 $\mu$m, more preferably having a groove depth of 10 $\mu$m to 500 $\mu$m and a top-to-top interval of 10 $\mu$m to 3,000 $\mu$m. When the groove depth is less than 0.1 $\mu$m, or the top-to-top interval is less than 5 $\mu$m, difficult is encountered in precise formming depending on the target shape. On the other hand, when the groove has a height larger than 1,000 $\mu$m or a top-to-top interval larger than 10,000 $\mu$m, the molding speed must be reduced, problematically impairing manufacture. Particular preferably, a cylindrical lens or a prism having grooves along a longitudinal direction parallel to the molding direction of the sheet is employed.

The thickness of the thermoplastic resin laminate of the present invention is preferably h + 0.1 to h + 10.0 mm, wherein h represents a groove depth of a pattern-forming roller. When a mirrored roller having no groove is employed, h is 0. When the groove depth is h + 0.1 mm or more, a resin sufficiently enters into the grooves of the pattern-forming rollers, whereby a poor thickness precision or poor appearance is avoided. When the groove depth is h + 10 mm or less, poor thickness precision or poor appearance due to lack of cooling uniformity is avoided. The groove depth is more preferably h + 0.3 to h + 0.5 mm, still more preferably h + 0.5 to h + 3.0 mm.

In the thermoplastic resin laminate of the present invention, the vinyl copolymer resin (A) layer and the vinyl copolymer resin (A) layer preferably has a thickness of h/2 + 10 to h + 500 $\mu$m, wherein h represents a groove depth of a pattern-forming roller. When a mirrored roller having no groove is employed, h is 0. When the thickness is less than h/2 + 10 $\mu$m, the thermoplastic resin laminate may have poor pattern-forming performance. When the thickness is larger than h + 500 $\mu$m, the thermoplastic resin laminate may have poor transparency when used as an optical sheet. The thickness is more preferably h/2 +30 to h + 200 $\mu$m.

When the thermoplastic resin (C) layer is provided between the vinyl copolymer resin (A') layer and the methacrylic resin (B) layer of the thermoplastic resin laminate of the present invention, the thermoplastic resin (C) layer preferably has a thickness of about 5 to 200 $\mu$m. When the thickness of the thermoplastic resin (C) layer falls within the range, adhesion between the vinyl copolymer resin (A') layer and the methacrylic resin (B) layer can be enhanced without impairing functions such as transparency, low birefringence, and pattern-formability.

The vinyl copolymer resin (A), the vinyl copolymer resin (A'), the methacrylic resin (B), and the thermoplastic resin (C) of the present invention may further contain various additives in use. Example of such additives include an

antioxidant, a UV-absorber, an antistatic agent, a release agent, a lubricant, a dye, a pigment, an inorganic filler, and a resin filler. No particular limitation is imposed on the blending method, and examples of the method include compounding all the ingredients, dry blending of a master batch, and dry blending of all ingredients.

Incidentally, one side or both sides of the thermoplastic resin laminate of the present invention may be subjected to one or more of hard coat treatment, anti-reflection treatment, and glare shield treatment. No particular limitation is imposed on the methods of hard coat treatment, anti-reflection treatment, and glare shield treatment, and any methods known in the art may be employed. Examples of such methods include forming a coating film from a thermosetting or light-curable resin composition, and forming dielectric thin film through vacuum vapor deposition.

The thermoplastic resin laminate of the present invention is useful as an optical sheet and serves as optical articles such as a transparent substrate material and a transparent protective material. Particularly, the thermoplastic resin laminate of the present invention is suitably used as a display front plate, light guide plate, prism sheet, etc. of a liquid crystal display device. Examples

The present invention will next be described in more detail by way of examples.

The thermoplastic resin laminates produced in the Examples and Comparative Examples were evaluated through the following procedure.

<Evaluation of transparency>

The total light transmittance (JIS K 7105) for each of the thermoplastic resin laminates and thermoplastic resin plates produced in the following Examples and Comparative Examples was determined by means of a differential colorimeter (COH-400, product of Nippon Denshoku Industries Co., Ltd.). A specimen which exhibited a total light transmittance of 91% or higher was evaluated as "good," and a specimen which exhibited a total light transmittance of lower than 91% was evaluated as "poor."

<Evaluation of pattern-formability>

The shape of the embossed surface of each of the prism sheets produced in the following Examples and Comparative Examples was determined by means of a surface roughness meter (Surfcom 3000A, product of Tokyo Seimitsu Co., Ltd.: ). Through measurement of maximum height Rz (JIS B 0601), the patterning degree was calculated. A resultant optical sheet having an embossed surface whose patterning degree was 90% or higher was evaluated as "good," and a resultant optical sheet having an embossed surface whose patterning degree was lower than 90% was evaluated as "poor." The patterning degree was calculated by the following formula:

$$\text{Patterning degree} = Rz/h \times 100\ (\%)$$

Rz = Maximum height, and
h = Groove depth of Roll.

<Evaluation of Adhesion>

Test specimens having dimensions of 10 cm in length × 10 cm in width were cut from the thermoplastic resin laminates produced in the following Examples 1 to 4, and Comparative Examples 1 to 4 and 9. Then, a two-component solvent-free epoxide adhesive (Trade name: Cemedine EP001, product of Cemedine Co., Ltd.) was applied to a cylinder-form test roller. The roller was bonded to the center of the surface of each specimen on the side of each of the vinyl copolymer resin (A), the vinyl copolymer resin (A'), comparative vinyl copolymer resin (A") or comparative polycarbonate resin. The specimen was allowed to stand in an oven maintained at 60°C.

After retention of the specimen in the oven for three hours or longer so as to cure the adhesive, a cut reaching the methacrylic resin (B) layer was made in in an area of the specimen near the cylinder from the side of the vinyl copolymer resin (A), the vinyl copolymer resin (A'), the vinyl copolymer resin (A"), or the polycarbonate resin layer. Then, the tension was increased at a substantially uniform rate which did not exceed 1.0 MPa/s, by means of a tensile tester (Trade name: Adhesion Tester 106, product of Elcometer Limited).

At the time when a tension of 1.0 MPa had been applied, a test region was visually observed. A specimen having a ratio of the peeled area to the original area of the test region less than 20% was evaluated as "good," and a specimen having a ratio of the peeled area to the original area of the test region 20% or more was evaluated as "poor."

Synthesis Example 1 [Production of vinyl copolymer resin (A2)]

A monomer composition containing 77.000 mol% of purified methyl methacrylate (product of Mitsubishi Gas Chemical Company Inc.), 22.998 mol% of purified styrene (product of Wako Pure Chemical Industries, Ltd.), and 0.002 mol% of t-amyl peroxy-2-ethylhexanoate (product of Arkema Yoshitomi, Ltd., trade name: Luperox 575) serving as a polymerization initiator was continuously fed to a 10-L complete mixing bath equipped with a helical ribbon impeller at a feed rate of 1 kg/h. The monomer composition was continuously polymerized for at a polymerization temperature of 150°C for an average residence time of 2.5 hours. The reaction mixture was continuously removed through the bottom of the bath so that the level of the composition in the polymerization bath was maintained at a constant level. The removed reaction mixture was fed to a solvent-removing apparatus, to thereby yield vinyl copolymer resin (A1) in pellet form.

The thus-produced vinyl copolymer resin (A1) was dissolved in methyl isobutylate (product of Kanto Kagaku), to thereby prepare a 10-mass% resin solution in methyl isobutylate. To a 1000-mL autoclave, 500 parts by mass of the 10-mass% vinyl copolymer resin (A1) solution in methyl isobutylate and 1 part by mass of Pd/C (product of N.E. Chemcat Corporation) were added, and the mixture was maintained at 200°C and a hydrogen pressure of 9 MPa for 15 hours, to thereby hydrogenate aromatic double bonds of the vinyl copolymer resin (A1). The catalyst was removed through a filter, and the filtrate was fed to a solvent-removing apparatus, to thereby yield vinyl copolymer resin (resin A2) in pellet form. The vinyl copolymer resin (A2) was found to have a methyl methacrylate structural unit content of 75 mol% and an aromatic double bond percent hydrogenation of 99%. The weight average molecular weight (as reduced to polystyrene standard) of the resin, as determined through gel permeation chromatography, was 124,000.

Synthesis Example 2 [Production of vinyl copolymer resin (A’2)]

A monomer composition containing 60.000 mol% of purified methyl methacrylate (product of Mitsubishi Gas Chemical Company Inc.), 39.998 mol% of purified styrene (product of Wako Pure Chemical Industries, Ltd.), and 0.002 mol% of t-amyl peroxy-2-ethylhexanoate (product of Arkema Yoshitomi, Ltd., trade name: Luperox 575) serving as a polymerization initiator was continuously fed to a 10-L complete mixing bath equipped with a helical ribbon impeller at a feed rate of 1 kg/h. The monomer composition was continuously polymerized for at a polymerization temperature of 150°C for an average residence time of 2.5 hours. The reaction mixture was continuously removed through the bottom of the bath so that the level of the composition in the polymerization bath was maintained at a constant level. The removed reaction mixture was fed to a solvent-removing apparatus, to thereby yield vinyl copolymer resin (A’1) in pellet form.

The thus-produced vinyl copolymer resin (A’1) was dissolved in methyl isobutylate (product of Kanto Kagaku), to thereby prepare a 10-mass% resin solution in methyl isobutylate. To a 1000-mL autoclave, 500 parts by mass of the 10-mass% vinyl copolymer resin (A1) solution in methyl isobutylate and 1 part by mass of Pd/C (product of N.E. Chemcat Corporation) were added, and the mixture was maintained at 200°C and a hydrogen pressure of 9 MPa for 15 hours, to thereby hydrogenate aromatic double bonds of the vinyl copolymer resin (A’1). The catalyst was removed through a filter, and the filtrate was fed to a solvent-removing apparatus, to thereby yield vinyl copolymer resin (resin A’2) in pellet form. The vinyl copolymer resin (A’2) was found to have a methyl methacrylate structural unit content of 58 mol% and an aromatic double bond percent hydrogenation of 99%. The weight average molecular weight (as reduced to polystyrene standard) of the resin, as determined through gel permeation chromatography, was 147,000.

Synthesis Example 3 [Production of vinyl copolymer resin (A"2)]

A monomer composition containing 92.000 mol% of purified methyl methacrylate (product of Mitsubishi Gas Chemical Company Inc.), 7.998 mol% of purified styrene (product of Wako Pure Chemical Industries, Ltd.), and 0.002 mol% of t-amyl peroxy-2-ethylhexanoate (product of Arkema Yoshitomi, Ltd., trade name: Luperox 575) serving as a polymerization initiator was continuously fed to a 10-L complete mixing bath equipped with a helical ribbon impeller at a feed rate of 1 kg/h. The monomer composition was continuously polymerized for at a polymerization temperature of 150°C for an average residence time of 2.5 hours. The reaction mixture was continuously removed through the bottom of the bath so that the level of the composition in the polymerization bath was maintained at a constant level. The removed reaction mixture was fed to a solvent-removing apparatus, to thereby yield vinyl copolymer resin (A"1) in pellet form.

The thus-produced vinyl copolymer resin (A"1) was dissolved in methyl isobutylate (product of Kanto Kagaku), to thereby prepare a 10-mass% resin solution in methyl isobutylate. To a 1000-mL autoclave, 500 parts by mass of the 10-mass% vinyl copolymer resin (A"1) solution in methyl isobutylate and 1 part by mass of Pd/C (product of N.E. Chemcat Corporation) were added, and the mixture was maintained at 200°C and a hydrogen pressure of 9 MPa for 15 hours, to thereby hydrogenate aromatic double bonds of the vinyl copolymer resin (A"1). The catalyst was removed through a filter, and the filtrate was fed to a solvent-removing apparatus, to thereby yield vinyl copolymer resin (resin A"2) in pellet form. The vinyl copolymer resin (A"2) was found to have a methyl methacrylate structural unit content of 90 mol% and an aromatic double bond percent hydrogenation of 99%. The weight average molecular weight (as reduced to polystyrene

standard) of the resin, as determined through gel permeation chromatography, was 98,000.

Example 1

By means of a multilayer extrusion apparatus having a single screw extruder having a shaft diameter of 32 mm, a single screw extruder having a shaft diameter of 65 mm, a feed block coupled to all the extruders, and a T-die coupled to the feed block, a thermoplastic resin laminate plate was produced. Specifically, the vinyl copolymer resin (resin A2) produced in Synthesis Example 1 was continuously fed to the single screw extruder having a shaft diameter of 32 mm and extruded under at a cylinder temperature of 250°C and a discharge rate of 6 kg/h. Separately, a methacrylic resin (trade name: Delpet 80NE, product of Asahi Kasei Chemicals Corporation) (resin B) was continuously fed to the single screw extruder having a shaft diameter of 65 mm, and extruded at a cylinder temperature of 260°C and a discharge rate of 50 kg/h. The feed block coupled to all the extruders was equipped with distributing pins of two types and two layers, and resin A2 and resin B were fed to the feed block at 260°C for lamination. The resultant work was extruded into a sheet through a T-die at 270°C, which was coupled to the end of the feed block. The sheet was cooled while the sheet was finished by means of three mirrored rollers, whereby a thermoplastic resin laminate of resin A2 and resin B was produced. In this case, the rollers were maintained at 90°C, 90°C, and 100°C in the order from the upstream side. The thickness of the resultant thermoplastic resin laminate was 1.0 mm, and the thickness of the resin A2 layer was 120 μm near the center.

The laminate of resin A2 and resin B was extruded under the same extruder, feed block, and T-die conditions. The most upstream roller of the three mirrored rollers was changed to a prism-form pattern-forming roll having a groove depth of 100 μm and a top-to-top between of 200 μm. The above-extruded product was embossed on the resin A2 side under cooling, to thereby produce an embossed prism sheet. In this case, the rollers were maintained at 90°C, 90°C, and 100°C in the order from the upstream side. Table 1 shows the evaluation results. Transparency, pattern-formability, and adhesion were good.

Example 2

By means of a multilayer extrusion apparatus having a single screw extruder having a shaft diameter of 25 mm, a single screw extruder having a shaft diameter of 32 mm, a single screw extruder having a shaft diameter of 65 mm, a feed block coupled to all the extruders, and a T-die coupled to the feed block, a thermoplastic resin laminate plate was produced. Specifically, a methyl methacrylate-styrene (5 : 5) copolymer resin [trade name: Estyrene MS500, product of Nippon Steel Chemical Co., Ltd.] (resin C1) was continuously fed to the single screw extruder having a shaft diameter of 25 mm and extruded under at a cylinder temperature of 240°C and a discharge rate of 3 kg/h. Also, the vinyl copolymer resin (resin A'2) produced in Synthesis Example 2 was continuously fed to the single screw extruder having a shaft diameter of 32 mm and extruded under at a cylinder temperature of 250°C and a discharge rate of 6 kg/h. Separately, a methacrylic resin (trade name: Delpet 80NE, product of Asahi Kasei Chemicals Corporation) (resin B) was continuously fed to the single screw extruder having a shaft diameter of 65 mm, and extruded at a cylinder temperature of 260°C and a discharge rate of 50 kg/h. The feed block coupled to all the extruders was equipped with distributing pins of three types and three layers, and resin A'2, resin C, and resin B were fed to the feed block at 260°C for lamination. The resultant work was extruded into a sheet through a T-die at 270°C, which was coupled to the end of the feed block. The sheet was cooled while the sheet was finished by means of three mirrored rollers, whereby a thermoplastic resin laminate of resin A'2, resin C, and resin B was produced. In this case, the rollers were maintained at 90°C, 90°C, and 100°C in the order from the upstream side. The thickness of the resultant thermoplastic resin laminate was 1.0 mm, the thickness of the resin A'2 layer was 120 μm near the center, and the thickness of the resin C1 layer was 60 μm near the center.

The laminate of resin A'2, resin C, and resin B was extruded under the same extruder, feed block, and T-die conditions. The most upstream roller of the three mirrored rollers was changed to a prism-form pattern-forming roll having a groove depth of 100 μm and a top-to-top between of 200 μm. The above-extruded product was embossed on the resin A'2 side under cooling, to thereby produce an embossed prism sheet. In this case, the rollers were maintained at 90°C, 90°C, and 100°C in the order from the upstream side. Table 1 shows the evaluation results. Transparency, pattern-formability, and adhesion were good.

Example 3

The procedure of Example 2 was repeated, except that a methyl methacrylate-styrene (3 : 7) copolymer resin [trade name: Estyrene MS300, product of Nippon Steel Chemical Co., Ltd.] (resin C2) was used instead of the methyl methacrylate-styrene (5 : 5) copolymer resin (resin C1) used in Example 2, to thereby produce a thermoplastic resin laminate of resin A'2, resin C2, and resin B, and a prism sheet having an embossed surface on the resin A'2 layer side. Table 1 shows the evaluation results. Transparency, pattern-formability, and adhesion were good.

Example 4

The procedure of Example 2 was repeated, except that an acrylonitrile-styrene copolymer resin [Trade name: Stylac AST8701, product of Asahi Kasei Chemicals Corporation] (Resin C3) was used instead of the methyl methacrylate-styrene (5 : 5) copolymer resin (resin C1) used in Example 2, to thereby produce a thermoplastic resin laminate of resin A'2, resin C3, and resin B, and a prism sheet having an embossed surface on the resin A'2 layer side. Table 1 shows the evaluation results. Transparency, pattern-formability, and adhesion were good.

Comparative Example 1

The procedure of Example 1 was repeated, except that the vinyl copolymer resin (resin A'2) synthesized in Synthesis Example 2 was used instead of the vinyl copolymer resin (resin A2) synthesized in Synthesis Example 1 and used in Example 1, to thereby produce a thermoplastic resin laminate of resin A'2 and resin B, and a prism sheet having an embossed surface on the resin A'2 layer side. Table 1 shows the evaluation results. Adhesion was poor.

Comparative Example 2

The procedure of Example 1 was repeated, except that the vinyl copolymer resin (resin A"2) synthesized in Synthesis Example 3 was used instead of the vinyl copolymer resin (resin A2) synthesized in Synthesis Example 1 and used in Example 1, to thereby produce a thermoplastic resin laminate of resin A"2 and resin B, and a prism sheet having an embossed surface on the resin A"2 layer side. Table 1 shows the evaluation results. Pattern-formability was poor.

Comparative Example 3

The procedure of Example 1 was repeated, except that the vinyl copolymer resin (resin A"2) synthesized in Synthesis Example 3 was used instead of the vinyl copolymer resin (resin A2) synthesized in Synthesis Example 1 and used in Example 1, and the rollers were maintained at 100°C, 90°C, and 100°C in the order from the upstream side, to thereby produce a thermoplastic resin laminate of resin A"2 and resin B, and a prism sheet having an embossed surface on the resin A"2 layer side. Table 1 shows the evaluation results. Pattern-formability was poor.

Comparative Example 4

The procedure of Example 1 was repeated, except that the vinyl copolymer resin (resin A"2) synthesized in Synthesis Example 3 was used instead of the vinyl copolymer resin (resin A2) synthesized in Synthesis Example 1 and used in Example 1, and the rollers were maintained at 110°C, 90°C, and 100°C in the order from the upstream side, to thereby produce a thermoplastic resin laminate of resin A"2 and resin B, and a prism sheet having an embossed surface on the resin A"2 layer side. Table 1 shows the evaluation results. Pattern-formability was poor.

Comparative Example 5

By means of a single-layer extrusion apparatus having a single screw extruder having a shaft diameter of 65 mm and a T-die, a thermoplastic resin laminate plate was produced. Specifically, a methacrylic resin (trade name: Delpet 80NE, product of Asahi Kasei Chemicals Corporation) (resin B) was continuously fed to the single screw extruder having a shaft diameter of 65 mm and extruded at a cylinder temperature of 260°C and a discharge rate of 50 kg/h. The resultant work was extruded into a sheet through a T-die at 270°C, which was coupled to the end of the single screw extruder. The sheet was cooled while the sheet was finished by means of three mirrored rollers, whereby a thermoplastic resin laminate of resin B was produced. In this case, the rollers were maintained at 90°C, 90°C, and 100°C in the order from the upstream side. The thickness of the resultant thermoplastic resin laminate was 1.0 mm.

The resin B was extruded under the same extruder and T-die conditions. The most upstream roller of the three mirrored rollers was changed to a prism-form pattern-forming roll having a groove depth of 100 $\mu$m and a top-to-top between of 200 $\mu$m. The above-extruded product was embossed on one side under cooling, to thereby produce a single-side embossed prism sheet of resin B. In this case, the rollers were maintained at 90°C, 90°C, and 100°C in the order from the upstream side. Table 1 shows the evaluation results. Pattern-formability was poor.

Comparative Example 6

The procedure of Comparative Example 5 was repeated, except that the rollers were maintained at 100°C, 90°C, and 100°C in the order from the upstream side, to thereby produce a thermoplastic resin laminate of resin B and

a single-side embossed prism sheet of resin B. Table 1 shows the evaluation results. Pattern-formability was poor.

Comparative Example 7

The procedure of Comparative Example 5 was repeated, except that the rollers were maintained at 110°C, 90°C, and 100°C in the order from the upstream side, to thereby produce a thermoplastic resin laminate of resin B and a single-side embossed prism sheet of resin B. Table 1 shows the evaluation results. Pattern-formability was poor.

Comparative Example 8

By means of a single-layer extrusion apparatus having a single screw extruder having a shaft diameter of 65 mm and a T-die, a thermoplastic resin laminate plate was produced. Specifically, a polycarbonate resin (trade name: Iupilon E2000, product of Mitsubishi Gas Chemical Company, Inc.) was continuously fed to the single screw extruder having a shaft diameter of 65 mm extruded at a cylinder temperature of 280°C and a discharge rate of 50 kg/h. The resultant work was extruded into a sheet through a T-die at 290°C, which was coupled to the end of the single screw extruder. The sheet was cooled while the sheet was finished by means of three mirrored rollers, whereby a thermoplastic resin laminate of the polycarbonate resin was produced. In this case, the rollers were maintained at 130°C, 130°C, and 180°C in the order from the upstream side. The thickness of the resultant thermoplastic resin laminate was 1.0 mm.
The polycarbonate resin was extruded under the same extruder and T-die conditions. The most upstream roller of the three mirrored rollers was changed to a prism-form pattern-forming roll having a groove depth of 100 μm and a top-to-top between of 200 μm. The above-extruded product was embossed on one side under cooling, to thereby produce a single-side embossed prism sheet of resin B. In this case, the rollers were maintained at 130°C, 130°C, and 180°C in the order from the upstream side. Table 1 shows the evaluation results. Transparency was poor.

Comparative Example 9

By means of a multilayer extrusion apparatus having a single screw extruder having a shaft diameter of 32 mm, a single screw extruder having a shaft diameter of 65 mm, a feed block coupled to all the extruders, and a T-die coupled to the feed block, a thermoplastic resin laminate plate was produced. Specifically, a polycarbonate resin (trade name: Iupilon E2000, product of Mitsubishi Gas Chemical Company, Inc.) was continuously fed to the single screw extruder having a shaft diameter of 32 mm and extruded under at a cylinder temperature of 280°C and a discharge rate of 6 kg/h. Separately, a methacrylic resin (trade name: Delpet 80NE, product of Asahi Kasei Chemicals Corporation) (resin B) was continuously fed to the single screw extruder having a shaft diameter of 65 mm, and extruded at a cylinder temperature of 260°C and a discharge rate of 50 kg/h. The feed block coupled to all the extruders was equipped with distributing pins of two types and two layers, and the polycarbonate resin and resin B were fed to the feed block at 280°C for lamination. The resultant work was extruded into a sheet through a T-die at 290°C, which was coupled to the end of the feed block. The sheet was cooled while the sheet was finished by means of three mirrored rollers, whereby a thermoplastic resin laminate of the polycarbonate resin and resin B was produced. In this case, the rollers were maintained at 130°C, 130°C, and 100°C in the order from the upstream side. The thickness of the resultant thermoplastic resin laminate was 1.0 mm, and the thickness of the polycarbonate resin layer was 120 μm near the center.
The laminate of the polycarbonate resin and resin B was extruded under the same extruder, feed block, and T-die conditions. The most upstream roller of the three mirrored rollers was changed to a prism-form pattern-forming roll having a groove depth of 100 μm and a top-to-top between of 200 μm. The above-extruded product was embossed on the polycarbonate resin side under cooling, to thereby produce an embossed prism sheet. In this case, the rollers were maintained at 130°C, 130°C, and 100°C in the order from the upstream side. Table 1 shows the evaluation results. Transparency was poor.

[Table 1]

Table 1

| | Thermoplastic resin laminate or Thermoplastic resin plate | | | | | Results of evaluation | | | | |
|---|---|---|---|---|---|---|---|---|---|---|
| | Vinyl copolymer resin (A) or (A') | Methacrylic resin (B) | Thermoplastic resin (C) | Others | Resin of embossed surface | Transparency | | Pattern-formability | | Adhesion |
| | | | | | | Total light transmittance (%) | Evaluation | Patterning degree (%) | Evaluation | Evaluation |
| Ex. 1 | Resin A2 | Resin B | - | - | Resin A2 | 93.0 | Good | 93 | Good | Good |
| Ex. 2 | Resin A'2 | Resin B | Resin C1 | - | Resin A'2 | 92.8 | Good | 95 | Good | Good |
| Ex. 3 | Resin A'2 | Resin B | Resin C2 | - | Resin A'2 | 92.4 | Good | 94 | Good | Good |
| Ex. 4 | Resin A'2 | Resin B | Resin C3 | - | Resin A'2 | 92.4 | Good | 95 | Good | Good |
| Comp. Ex. 1 | Resin A'2 | Resin B | - | - | Resin A2 | 92.7 | Good | 94 | Good | Poor |
| Comp. Ex. 2 | Resin A"2 | Resin B | - | - | Resin A'2 | 92.8 | Good | 81 | Poor | Good |
| Comp. Ex. 3 | Resin A"2 | Resin B | - | - | Resin A"2 | 92.8 | Good | 86 | Poor | Good |
| Comp. Ex. 4 | Resin A"2 | Resin B | - | - | Resin A"2 | 92.8 | Good | 82 | Poor | Good |
| Comp. Ex. 5 | - | Resin B | - | - | Resin B | 93.0 | Good | 78 | Poor | - |
| Comp. Ex. 6 | - | Resin B | - | - | Resin B | 93.0 | Good | 84 | Poor | - |
| Comp. Ex. 7 | - | Resin B | - | - | Resin B | 93.0 | Good | 81 | Poor | - |
| Comp. Ex. 8 | - | - | - | Polycarbonate resin | Polycarbonate resin | 90.2 | Poor | 96 | Good | - |
| Comp. Ex. 9 | - | Resin B | - | Polycarbonate resin | Polycarbonate resin | 90.3 | Poor | 96 | Good | Good |

Industrial Applicability

The thermoplastic resin laminate of the present invention has excellent transparency, low birefringence, high pattern-formability and is suitable for use as a transparent substrate material or a transparent protective material, in particular as an optical sheet of a liquid crystal display device.

## Claims

1. A thermoplastic resin laminate formed of a methacrylic resin (B) layer, and a vinyl copolymer resin (A) layer laminated on one side or both sides of the methacrylic resin (B) layer, wherein the vinyl copolymer resin (A) comprises a (meth)acrylate structural unit (a) represented by the following formula (1) and an aliphatic vinyl structural unit (b) represented by the following formula (2);
in which the ratio of the sum of the (meth)acrylate structural units (a) and the aliphatic vinyl structural units (b) is 90 to 100 mol% with respect to all the structural units that form the vinyl copolymer resin (A); in which the ratio by mole of the (meth)acrylate structural unit (a) to the aliphatic vinyl structural unit (b) is 65 : 35 to 85 : 15; and in which the methacrylic resin (B) is poly(methyl methacrylate) or a methyl methacrylate-methyl acrylate copolymer resin;

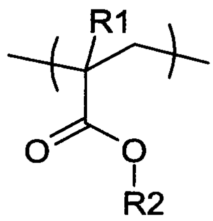

(1)

wherein R1 represents a hydrogen atom or a methyl group, and R2 represents a C1 to C18 alkyl group;

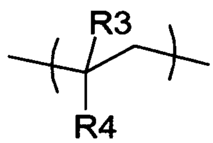

(2)

wherein R3 represents a hydrogen atom or a methyl group, and R4 represents a cyclohexyl group optionally having a C1 to C4 alkyl substituent.

2. A thermoplastic resin laminate formed of a methacrylic resin (B) layer, a thermoplastic resin (C) layer comprising a methyl methacrylate-styrene copolymer or an acrylonitrile-styrene copolymer and being laminated on one side or both sides of the methacrylic resin (B) layer, and a vinyl copolymer resin (A') layer further laminated thereon, wherein the vinyl copolymer resin (A') comprises a (meth)acrylate structural unit (a) represented by the following formula (1), and an aliphatic vinyl structural unit (b) represented by the following formula (2); in which the ratio of the sum of the (meth)acrylate structural units (a) and the aliphatic vinyl structural units (b) is 90 to 100 mol% with respect to all the structural units that form the vinyl copolymer resin (A'); in which the ratio by mole of the (meth)acrylate structural unit (a) to the aliphatic vinyl structural unit (b) is 15 : 85 to 85 : 15; and in which the methacrylic resin (B) is poly(methyl methacrylate) or a methyl methacrylate-methyl acrylate copolymer resin;

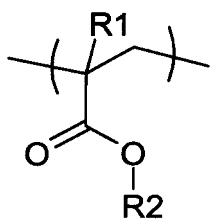

(1)

wherein R1 represents a hydrogen atom or a methyl group, and R2 represents a C1 to C18 alkyl group;

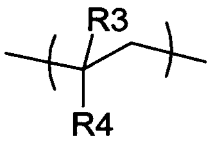

(2)

wherein R3 represents a hydrogen atom or a methyl group, and R4 represents a cyclohexyl group optionally having a C1 to C4 alkyl substituent.

3. A thermoplastic resin laminate according to claim 1 or 2, wherein the vinyl copolymer resin (A) or the vinyl copolymer resin (A') is one obtained through polymerization of at least one (meth)acrylate monomer and at least one aromatic vinyl monomer followed by hydrogenation of 70% or more of the aromatic double bonds derived from the aromatic vinyl monomer.

4. A thermoplastic resin laminate according to any of claims 1 to 3, wherein, in the formula (1), each of R1 and R2 is a methyl group.

5. A thermoplastic resin laminate according to any of claims 1 to 4, wherein, in the formula (2), R3 is a hydrogen atom, and R4 is a cyclohexyl group.

6. A thermoplastic resin laminate according to any of claims 1 to 5, wherein one side or both sides of the thermoplastic resin laminate are embossed.

7. An optical sheet comprising a thermoplastic resin laminate as recited in any of claims 1 to 6.

## Patentansprüche

1. Ein thermoplastisches Harzlaminat, gebildet aus einer Methacrylharz (B)-Schicht und einer Vinylcopolymerharz (A)-Schicht, die auf eine Seite oder beide Seiten der Methacrylharz (B)-Schicht laminiert ist, wobei das Vinylcopolymerharz (A) eine (Meth)acrylat-Struktureinheit (a), dargestellt durch die nachstehende Formel (1) und eine aliphatische Vinyl-Struktureinheit (b), dargestellt durch die nachstehende Formel (2), umfasst;
wobei der Anteil der Summe der (Meth)acrylat-Struktureinheiten (a) und der aliphatischen Vinyl-Struktureinheiten (b) 90 bis 100 Mol% beträgt, bezogen auf alle Struktureinheiten, die das Vinylcopolymerharz (A) bilden; wobei das Molverhältnis der (Meth)acrylat-Struktureinheit (a) zu der aliphatischen Vinyl-Struktureinheit (b) 65 : 35 bis 85 : 15 beträgt; und wobei das Methacrylharz (B) Poly(methylmethacrylat) oder ein Methylmethacrylat-Methylacrylat-Copolymerharz ist;

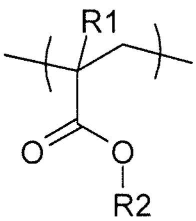

(1)

wobei R1 ein Wasserstoffatom oder eine Methylgruppe darstellt, und R2 eine C1- bis C18-Alkylgruppe darstellt;

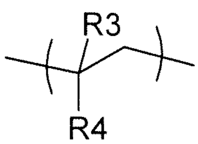

(2)

wobei R3 ein Wasserstoffatom oder eine Methylgruppe darstellt, und R4 eine Cyclohexylgruppe darstellt, die gegebenenfalls einen C1- bis C4-Alkylsubstituenten aufweist.

2. Ein thermoplastisches Harzlaminat, gebildet aus einer Methacrylharz (B)-Schicht, einer thermoplastischen Harz

(C)-Schicht, die ein Methylmethacrylat-Styrol-Copolymer oder ein Acrylnitril-Styrol-Copolymer umfasst, und auf eine Seite oder beide Seiten der Methacrylharz (B)-Schicht laminiert ist, und einer Vinylcopolymerharz (A')-Schicht, die ferner darauf laminiert ist, wobei das Vinylcopolymerharz (A') eine (Meth)acrylat-Struktureinheit (a), dargestellt durch die nachstehende Formel (1), und eine aliphatische Vinyl-Struktureinheit (b), dargestellt durch die nachstehende Formel (2), umfasst; wobei der Anteil der Summe der (Meth)acrylat-Struktureinheiten (a) und der aliphatischen Vinyl-Struktureinheiten (b) 90 bis 100 Mol% beträgt, bezogen auf alle Struktureinheiten, die das Vinylcopolymerharz (A') bilden; wobei das Molverhältnis der (Meth)acrylatstruktureinheit (a) zu der aliphatischen Vinyl-Struktureinheit (b) 15 : 85 bis 85 : 15 beträgt; und wobei das Methacrylharz (B) Poly(methylmethacrylat) oder ein Methylmethacrylat-Methylacrylat-Copolymerharz ist;

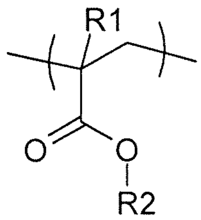

(1)

wobei R1 ein Wasserstoffatom oder eine Methylgruppe darstellt, und R2 eine C1- bis C18-Alkylgruppe darstellt;

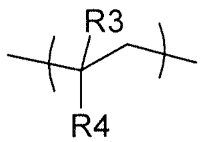

(2)

wobei R3 ein Wasserstoffatom oder eine Methylgruppe darstellt, und R4 eine Cyclohexylgruppe darstellt, die gegebenenfalls einen C1- bis C4-Alkylsubstituenten aufweist.

3. Ein thermoplastisches Harzlaminat nach Anspruch 1 oder 2, wobei das Vinylcopolymerharz (A) oder das Vinylcopolymerharz (A') eines ist, das durch Polymerisation mindestens eines (Meth)acrylat-Monomers und mindestens eines aromatischen Vinylmonomers, gefolgt von Hydrieren von 70% oder mehr der aus dem aromatischen Vinylmonomer abgeleiteten aromatischen Doppelbindung, erhalten wird.

4. Ein thermoplastisches Harzlaminat nach einem der Ansprüche 1 bis 3, wobei in der Formel (1) R1 und R2 jeweils eine Methylgruppe ist.

5. Ein thermoplastisches Harzlaminat nach einem der Ansprüche 1 bis 4, wobei in der Formel (2) R3 ein Wasserstoffatom ist und R4 eine Cyclohexylgruppe ist.

6. Ein thermoplastisches Harzlaminat nach einem der Ansprüche 1 bis 5, wobei eine Seite oder beide Seiten des thermoplastischen Harzlaminats geprägt sind.

7. Ein optisches Flächenmaterial, umfassend ein thermoplastisches Harzlaminat wie in einem der Ansprüche 1 bis 6 angegeben.

## Revendications

1. Stratifié de résine thermoplastique formé d'une couche de résine méthacrylique (B) et d'une couche de résine de copolymère de vinyle (A) stratifiée sur un seul côté ou sur les deux côtés de la couche de résine méthacrylique (B), dans lequel la résine de copolymère de vinyle (A) comprend un motif structurel (méth)acrylate (a) représenté par la formule (1) qui suit et un motif structurel vinyle aliphatique (b) représenté par la formule (2) qui suit ;
dans lequel la proportion de la somme des motifs structurels (méth)acrylate (a) et des motifs structurels vinyle aliphatique (b) est de 90 à 100 % en moles par rapport à tous les motifs structurels qui forment la résine de copolymère de vinyle (A) ; dans lequel le ratio en moles du motif structurel (méth)acrylate (a) sur le motif structurel vinyle aliphatique (b) est de 65/35 à 85/15, et dans lequel la résine méthacrylique (B) est une résine de poly(méthacrylate de méthyle) ou de copolymère de méthacrylate de méthyle-acrylate de méthyle ;

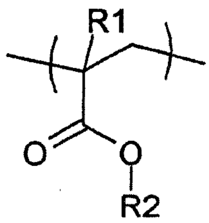

(1)

dans laquelle R1 représente un atome d'hydrogène ou un groupe méthyle, et R2 représente un groupe alkyle en C1 à C18 ;

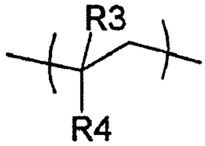

(2)

dans laquelle R3 représente un atome d'hydrogène ou un groupe méthyle, et R4 représente un groupe cyclohexyle portant éventuellement un substituant alkyle en C1 à C4.

2. Stratifié de résine thermoplastique formé d'une couche de résine méthacrylique (B), d'une couche de résine thermoplastique (C) comprenant un copolymère de méthacrylate de méthyle-styrène ou un copolymère d'acrylonitrile-styrène et stratifiée sur un seul côté ou sur les deux côtés de la couche de résine méthacrylique (B), et d'une couche de résine de copolymère de vinyle (A') encore stratifiée dessus, dans lequel la résine de copolymère de vinyle (A') comprend un motif structurel (méth)acrylate (a) représenté par la formule (1) qui suit et un motif structurel vinyle aliphatique (b) représenté par la formule (2) qui suit ; dans lequel la proportion de la somme des motifs structurels (méth)acrylate (a) et des motifs structurels vinyle aliphatique (b) est de 90 à 100 % en moles par rapport à tous les motifs structurels qui forment la résine de copolymère de vinyle (A') ; dans lequel le ratio en moles du motif structurel (méth)acrylate (a) sur le motif structurel vinyle aliphatique (b) est de 15/85 à 85/15, et dans lequel la résine méthacrylique (B) est une résine de poly(méthacrylate de méthyle) ou de copolymère de méthacrylate de méthyle-acrylate de méthyle ;

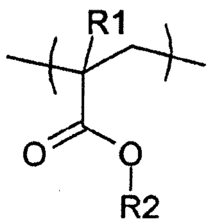

(1)

dans laquelle R1 représente un atome d'hydrogène ou un groupe méthyle, et R2 représente un groupe alkyle en C1 à C18 ;

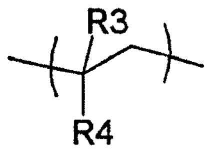

(2)

dans laquelle R3 représente un atome d'hydrogène ou un groupe méthyle, et R4 représente un groupe cyclohexyle portant éventuellement un substituant alkyle en C1 à C4.

3. Stratifié de résine thermoplastique selon la revendication 1 ou 2, dans lequel la résine de copolymère de vinyle (A) ou la résine de copolymère de vinyle (A') est obtenue par polymérisation d'au moins un monomère de (méth)acrylate et d'au moins un monomère de vinyle aromatique, suivie d'une hydrogénation de 70 % ou plus des doubles liaisons aromatiques dérivées du monomère de vinyle aromatique.

4. Stratifié de résine thermoplastique selon l'une quelconque des revendications 1 à 3, dans lequel, dans la formule (1), chacun de R1 et R2 est un groupe méthyle.

5. Stratifié de résine thermoplastique selon l'une quelconque des revendications 1 à 4, dans lequel, dans la formule (2), R3 est un atome d'hydrogène, et R4 est un groupe cyclohexyle.

6. Stratifié de résine thermoplastique selon l'une quelconque des revendications 1 à 5, dans lequel un seul côté ou les deux côtés du stratifié de résine thermoplastique sont emboutis.

7. Feuille optique comprenant un stratifié de résine thermoplastique tel que défini dans l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009172794 A
- JP 2007090859 A
- JP 2007108475 A
- US 20040247885 A